# EUROPEAN PATENT APPLICATION

(11) **EP 1 981 258 A1**
(43) Date of publication of application: **15.10.2008**
(21) Application number: 08154369.6
(22) Date of filing: 11.04.2008
(51) Int. Cl.: H04N 1/00, H04L 29/06

(54) **Network terminal management apparatus, method and program for providing a task list to a multifunction device**

(30) Priority: 11.04.2007 JP 2007104211
(71) Applicant: Canon Kabushiki Kaisha, Tokyo 146-8501 (JP)
(72) Inventor: Hagiuda, Tadashi, Ohta-ku Tokyo (JP)
(74) Representative: Sharp, Alan Cooper

(57) **Abstract**

A network terminal management apparatus (101) is able to manage terminals using a simple method, without the user feeling that convenience in terms of operability has been compromised. This network terminal management apparatus (101) generates a list table of target tasks in which user terminal (102) information is included, and sends the information of the list table to the user terminal (102). This enables the user to select desired target tasks from the displayed list table and enjoy services even with a multi-function processor having low operability.

## Description

### BACKGROUND OF THE INVENTION

### Field of the Invention

The present invention relates to a network terminal management apparatus that manages network terminals.

### Description of the Related Art

Heretofore, network terminal management systems have been widely realized in networks constituted by a server and terminals such as personal computers (PCs) in which the server functions as a network terminal management apparatus to manage the terminals and provide desired services to the terminals. On the other hand, in recent years, terminals that connect to a network have become diversified to include mobile telephones, personal digital assistants (PDAs), multifunction processors, and the like. In such systems, a mobile phone, for example, is able to access a World Wide Web (WWW) server by specifying an URL from a web browser, and the server, on the other hand, is able to provide optimal services for the state of the terminal, which is a mobile phone in this case.

If the terminal connected to a server via a network is a mobile phone, PC or the like, the display unit such as a display or the input unit of such a terminal is provided with sufficient functions, so the operability of the web browser is not considered an issue. However, in the case where a multifunction processor that combines scanner, printer and other functions is used as the terminal, user friendliness decreases because the operability of the web browser is reduced by the restricted operability of the panel compared to when a mobile phone and a PC is used.

Japanese Patent Laid-Open No. 2002-135605 discloses a system that realizes optimal services in a network configuration that includes a WWW server, an image server, and a PC or game console as a client terminal. According to this system, the client terminal sends environment variables indicating at least the type of operating system (OS) and the type of browser to the image server, and the image server determines the capacity of the client terminal based on received HTTP environment variables. However, because the aforementioned multifunction processor has various settings and states, the server typically has difficulty providing optimal services by receiving only environment variables, and the flow of processing performed in the server becomes complex.

Thus, in the case where a multifunction processor is used as the terminal, technology is desirable that enables a network terminal management system to be constructed using a simple method, without the user feeling that convenience in terms of operability has been compromised.

### SUMMARY OF THE INVENTION

The present invention provides a network terminal management apparatus that is able to manage terminals using a simple method, without the user feeling that convenience in terms of operability has been compromised.

The present invention in its first aspect provides a network terminal management apparatus as specified in claims 1 to 6.

The present invention in its second aspect provides a network terminal management system as specified in claim 7.

The present invention in its third aspect provides a network terminal management method as specified in claims 8 to 10.

The present invention in its fourth aspect provides a network terminal management program as specified in claim 11.

The present invention in its fifth aspect provides a storage medium as specified in claim 12.

According to the present invention, the network terminal management apparatus is able to manage terminals using a simple method, without the user feeling that convenience in terms of operability has been compromised.

Further features of the present invention will become apparent from the following description of exemplary embodiments (with reference to the attached drawings).

### BRIEF DESCRIPTION OF THE DRAWINGS

FIG. 1 shows the configuration of a network terminal management system that includes a network terminal management apparatus according to a first embodiment of the present invention.

FIG. 2 is a conceptual diagram showing the structure of a framework used in the network terminal management system.

FIG. 3 is a flowchart showing processing procedures performed in the case where the network terminal management apparatus is accessed by a terminal, according to the first embodiment of the present invention.

FIG. 4 shows an exemplary login window displayed in step S308 shown in FIG. 3.

FIG. 5 shows an exemplary task list window generated by the network terminal management apparatus.

FIG. 6 is a flowchart showing processing procedures performed when the user creates a task.

FIG. 7 shows an exemplary service list window generated in step S606 shown in FIG. 6.

FIG. 8 shows an exemplary terminal selection window generated in step S609 shown in FIG. 6.

FIG. 9 shows an exemplary task editing window generated in step S611 shown in FIG. 6.

FIG. 10 shows an exemplary task registration settings window generated in step S613 shown in FIG. 6.

FIGS. 11A & 11B show the structure of task data stored in the network terminal management apparatus.

FIG. 12 shows an exemplary task information list stored in the network terminal management apparatus.

FIG. 13 is a flowchart showing processing performed by the network terminal management apparatus to generate a task list in step S311 shown in FIG. 3.

FIG. 14 is an exemplary table showing the correspondence between each task and the user terminal capacity required to execute the task.

FIG. 15 is a flowchart showing processing procedures performed in the case where the network terminal management apparatus is accessed by a terminal, according to a second embodiment of the present invention.

FIG. 16 shows an exemplary task list window generated in step S1511 shown in FIG. 15.

FIG. 17 is a flowchart showing processing performed by the network terminal management apparatus to generate a task list in step S1511 shown in FIG. 15.

FIG. 18 is a flowchart showing processing procedures performed in the case where the network terminal management apparatus is accessed by a terminal, according to a third embodiment of the present invention.

FIG. 19 is a flowchart showing processing performed by the network terminal management apparatus to generate a task list in step S1809 shown in FIG. 18.

### DESCRIPTION OF THE EMBODIMENTS

Hereinafter, preferred embodiments of the present invention will be described in detail with reference to the drawings. Note that the same reference numerals will be appended to the same constituent elements, and description thereof will be omitted at later instances.

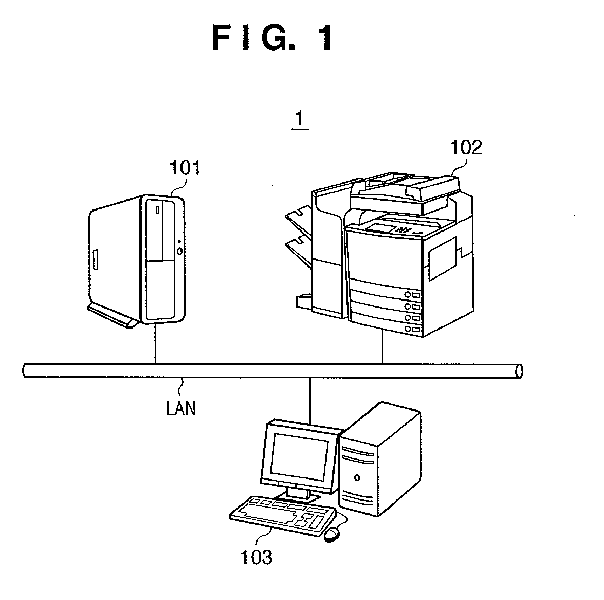

FIG. 1 shows the configuration of a network terminal management system that includes a network terminal management apparatus according to a first embodiment of the present invention. As shown in FIG. 1, the network terminal management system 1 includes a network terminal management apparatus 101 that performs network terminal management, a terminal 102, and a general-purpose PC terminal 103. The network terminal management apparatus 101, the terminal 102, and the PC terminal 103 are communicably connected via a local area network (hereinafter, LAN). The network terminal management apparatus 101, for example, has a WWW server function and manages the terminal 102 and the PC terminal 103 on the network. The terminal 102, for example, is a multifunction peripheral (also referred to hereinafter as a "multifunction processor") that combines printer, scanner and other functions that have conventionally been realized by separate devices, and is provided with a web browser. The PC terminal 103 is also provided with a web browser, similarly to the terminal 102, and typically has greater panel operability than the terminal 102. The terminal 102 and the PC terminal 103 are able to access the network terminal management apparatus 101 by launching the web browser and specifying a URL or the like. The configuration shown in FIG. 1 may include a plurality of terminals 102 and PC terminals 103.

In the present embodiment, the user of the terminal 102 accesses the network terminal management apparatus 101 by specifying a URL, for example. Hereinafter, the terminal 102 that accesses the network terminal management apparatus 101 as the result of a user operation will be referred to as a "user terminal". If the user terminal has accessed the network terminal management apparatus 101, the network terminal management apparatus 101 recognizes that the user terminal is a multifunction processor using an HTTP environment variable, and acquires information such as an IP address or the like. The network terminal management apparatus 101 requests terminal information with respect to the acquired IP address. Hereinafter, the terminal information of a user terminal, in particular, will be referred to as "user terminal information". The user terminal that receives the request sends user terminal information to the network terminal management apparatus 101.

The network terminal management apparatus 101 generates a list of optimal processing for the user terminal, with reference to the acquired user terminal information and user authentication information input by the user. A detailed description of the operations referred to above will be given later.

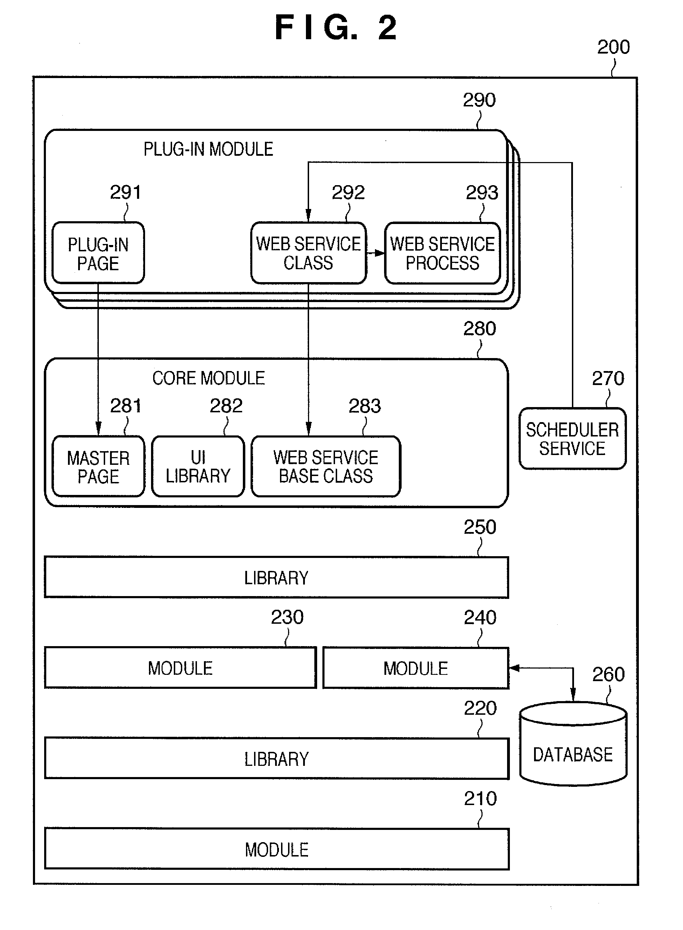

FIG. 2 is a conceptual diagram showing the structure of a framework used in the network terminal management system. To realize not only the network terminal management system according to the present embodiment but any system with a given object, the concept of a framework is typically used as a mechanism for stipulating the connection between components having individual functions and achieving the object of the system. This framework is constituted by a plurality of modules, libraries and the like. The system developer is able to develop web services via a network according to the present embodiment on the framework. In the present embodiment, Microsoft Corporation's .NET Framework (registered trademark) is used as a framework 200.

A module 210 shown in FIG. 2 is the Common Language Runtime which can be used by programs compatible with the framework 200. A library 220 is a class library in which classes that can be used by programs compatible with the framework 200 are compiled as components. A module 230 forms the foundation for operating dynamic web pages using a class library for web services provided by the framework 200. A module 240 forms the foundation for a program corresponding to the framework 200 to access database. A library 250 is a class library of the framework in which classes that can be commonly used by the different modules are compiled as program components.

A database 260 stores user information held in the network terminal management system and the addresses, states and various settings of terminals being managed. A module 270 provides a scheduler service for controlling the execution timing of the various processing executed in the present embodiment. A core module 280 has functions common to the various modules. The core module 280 includes a master page 281 as a user interface (UI) template for providing to plug-in modules 290, and a UI library 282 in which controls common to the user interfaces are compiled. Further, the core module 280 includes a web service base class 283, and is able to launch the appropriate plug-in module 290. The framework 200 includes a plurality of plug-in modules 290, and respective plug-in modules 290 can be added or deleted as necessary. The plug-in modules 290 are incorporated in the master page 281 provided by the core module 280, and include a plug-in page 291 for displaying unique user interfaces. Further, the plug-in modules 290 are launched by the web service base class 283, and include a web service class 292 for launching a web service process 293 for executing unique plug-in tasks that have been installed.

In the network terminal management system constituted by the framework shown in FIG. 2, the core module 280 receives an access request from the user when the user accesses the network terminal management apparatus 101, and is able to acquire an HTTP environment variable. The acquired HTTP environment variable is analyzed, and if the user terminal is a multifunction processor, the required plug-in module 290 is launched. As a result, the network terminal management apparatus 101 acquires user terminal information, and sends page information for inputting user authentication information to the user terminal. The network terminal management apparatus 101 receives user authentication information input by the user, and searches the database 260 using this and the user terminal information. The network terminal management apparatus 101 is thereby able to send optimal page information to the user terminal.

As described above, the present embodiment realizes web services via a network by developing the web services on a framework such as that shown in FIG. 2. Hereinafter, the operations of the web services according to the present embodiment will be described while distinguishing between the network terminal management apparatus 101 and the terminal 102.

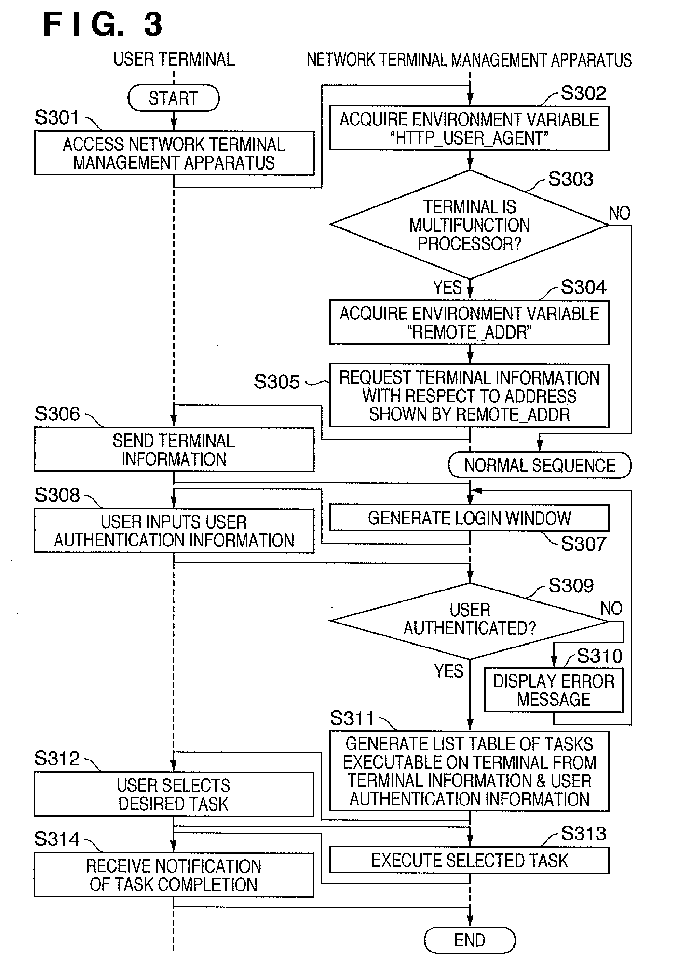

FIG. 3 is a flowchart showing processing procedures performed in the case where the network terminal management apparatus 101 is accessed by a terminal, according to the first embodiment of the present invention. The broken line on the left side of FIG. 3 shows the steps performed in the terminal 102, while the broken line on the right side shows the steps performed in the network terminal management apparatus 101. In the flowcharts according to the present embodiment, the processing follows the arrows shown by the solid lines between the steps.

In step S301, the user specifies a URL from the web browser of the terminal 102 (user terminal) and accesses the network terminal management apparatus. In step S302, the network terminal management apparatus 101 acquires access information. In the present embodiment, an HTTP environment variable HTTP_USER_AGENT, for example, is acquired as access information. In step S303, it is determined whether the user terminal is a multifunction processor, based on the browser name, with reference to the acquired HTTP_USER_AGENT (hereinafter, also referred to as terminal type recognition means). If it is determined that the user terminal is a multifunction processor, the processing proceeds to step S304. On the other hand, if it is determined that the user terminal is an apparatus other than a multifunction processor such as a PC, for example, processing typically used in the network terminal management apparatus 101 is executed. In step S304, the network terminal management apparatus 101 acquires an HTTP environment variable REMOTE_ADDR. In step S305, the network terminal management apparatus 101 recognizes the IP address of the user terminal with reference to the acquired REMOTE_ADDR, and requests detailed terminal information about the user terminal. Here, the Simple Network Management Protocol (SNMP), widely known as a management protocol for network devices, may be used, for example, as means for requesting terminal information.

In step S306, the user terminal, in response to the request from the network terminal management apparatus 101, notifies terminal information (user terminal information) such as type information, state information and an option attachment status to the network terminal management apparatus 101. In the present embodiment, the network terminal management apparatus 101 acquires the user terminal information using such terminal information acquiring means. In step S307, the network terminal management apparatus 101 generates HTML data for a user login window in order to perform user authentication, and sends the HTML data to the user terminal. In step S308, the login window generated by the network terminal management apparatus 101 is displayed on the web browser of the user terminal.

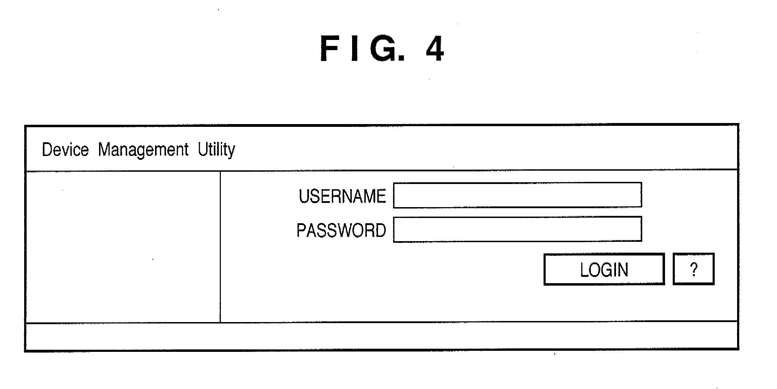

FIG. 4 shows an exemplary login window displayed in step S308. In step S308, the user inputs a prescribed username and password in the window shown in FIG. 4.

In step S309, the network terminal management apparatus 101 performs user authentication using the username and password input by the user. In this case, the network terminal management apparatus 101 holds registered username and password information in the database 260, and may determine in step S309 whether the information input by the user matches the registered information. If the user is authenticated in step S309, the processing proceeds to step S311. On the other hand, if the user is not authenticated, an error message indicating that authentication failed is displayed in step S310, and steps S307 to S309 are repeated.

In step S311, a list table of processing executable on the user terminal is generated, with reference to the user terminal information sent from the user terminal and the user authentication information input by the user (generated by what is hereinafter referred to as task list generating means). Hereinafter, processing executable on a user terminal by the network terminal management apparatus 101 will be called a task. The page information of the task list generated by the network terminal management apparatus 101 is sent to the user terminal (hereinafter, also referred to as task list sending means), and in step S312, one or more tasks are listed on the web browser of the user terminal. A detailed description of the task list generating means will be given later.

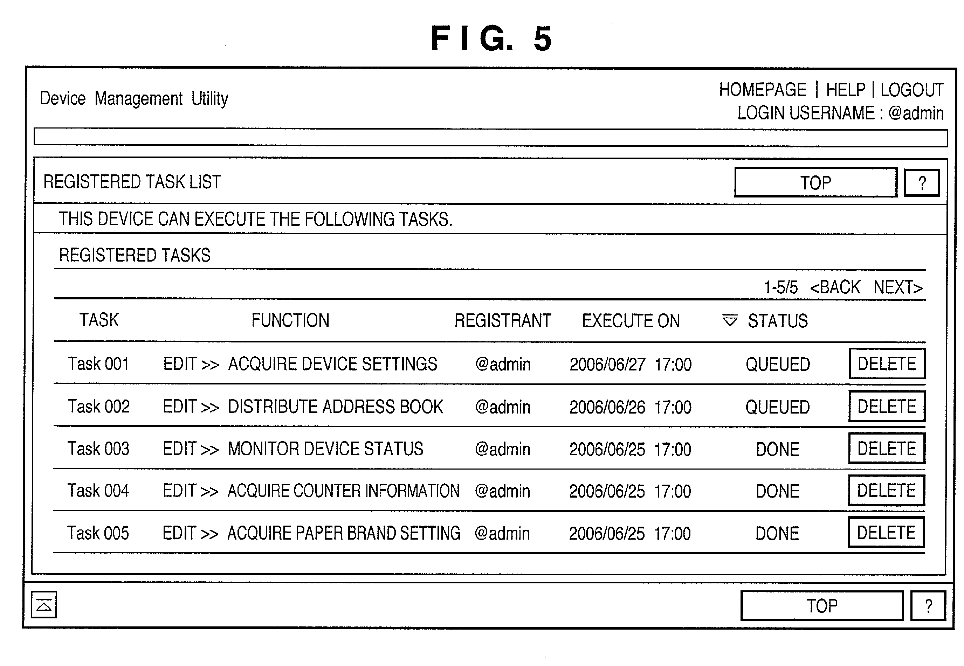

FIG. 5 shows an exemplary task list window generated by the network terminal management apparatus. As shown in FIG. 5, tasks for performing settings management to acquire and distribute the terminal ("device" in FIG. 5) name, installation location information, network settings information and the like, terminal rebooting, address book distribution, paper type specification, and counter information acquisition, for example, are listed. In step S312, the user is able to select a desired task. In step S313, the network terminal management apparatus 101 executes the task selected by the user. In step S314, the user terminal receives a notification from the network terminal management apparatus 101 showing completion of the executed task, and ends the flowchart shown in FIG. 3.

As described above, in the present embodiment, the user uses the web browser of a terminal to check a list of tasks that can be implemented by the terminal, and is able to select a desired task. In the present embodiment, the names and content of the tasks are created by the user in advance. In this case, the user creates tasks using the PC terminal 103 which has high web browser operability.

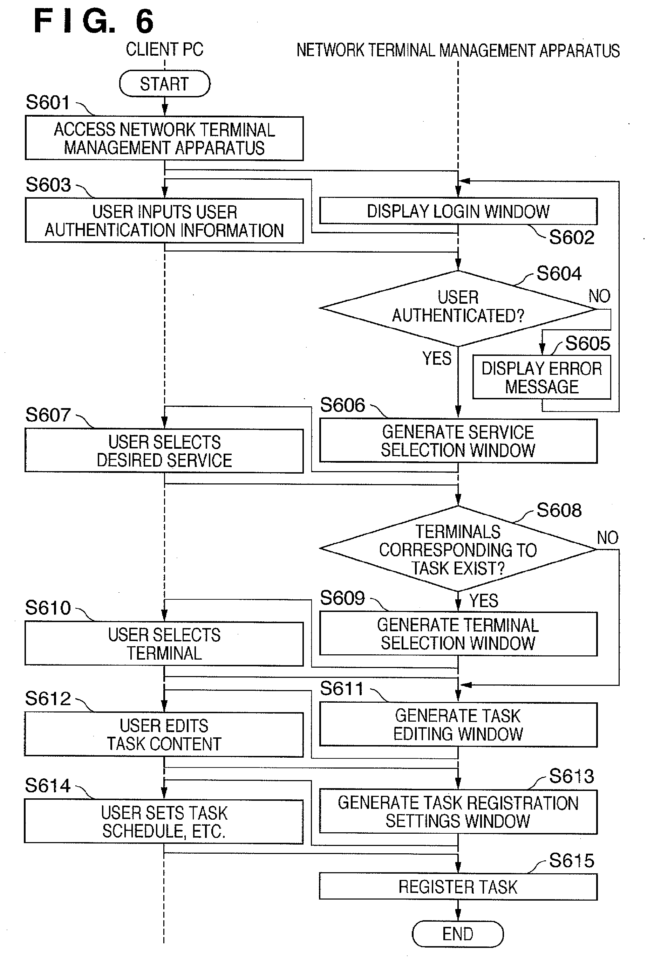

Here, the processing performed when the user creates a task will be described. FIG. 6 is a flowchart showing processing procedures performed when the user creates a task. In the present embodiment, the PC terminal 103 is used rather than the network terminal management apparatus when the user creates a task. Hereinafter, the PC terminal 103 used when the user creates a task will also be particularly referred to as the "client PC".

In step S601, the user specifies a URL from the web browser of the client PC, and accesses the network terminal management apparatus 101. In step S602, the network terminal management apparatus 101 generates HTML data for a user login window in order to perform user authentication, and sends the HTML data to the client PC. In step S603, the login window sent from the network terminal management apparatus 101 is displayed on the web browser of the client PC. The user inputs a username and a password in the displayed login window. If, in step S604, the network terminal management apparatus 101 authenticates the input user authentication information, the processing proceeds to step S606. On the other hand, if the input user authentication information is not authenticated, an error message indicating that authentication failed is displayed on the client PC in step S605, and steps S602 to S604 are repeated. In step S606, the network terminal management apparatus 101 generates HTML data for a service selection window, and sends the HTML data to the client PC.

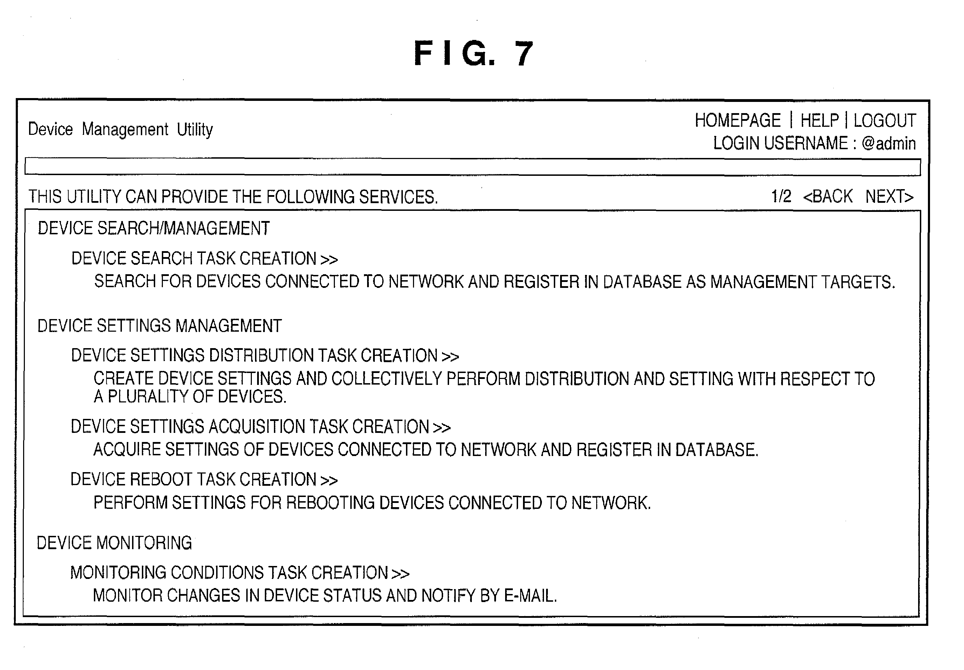

FIG. 7 shows an exemplary service list window generated in step S606. As shown in FIG. 7, the user is able to select services for acquiring and distributing terminal ("device" in FIG. 7) names, installation location information and network information, rebooting terminals, and the like.

In step S607, the user selects a desired service from the service list displayed on the web browser of the PC client. In step S608, it is determined whether there are terminals to be displayed on a terminal selection window. Here, it may, for example, be determined whether there are terminals networked to the network terminal management apparatus 101. If it is determined that there are terminals to be displayed on a terminal selection window, the processing proceeds to step S609, whereas if it is determined that there are no terminals to be displayed on a terminal selection window, the processing proceeds to step S611. In step S609, the network terminal management apparatus 101 generates HTML data for a terminal selection window for selecting a terminal, and sends the HTML data to the client PC.

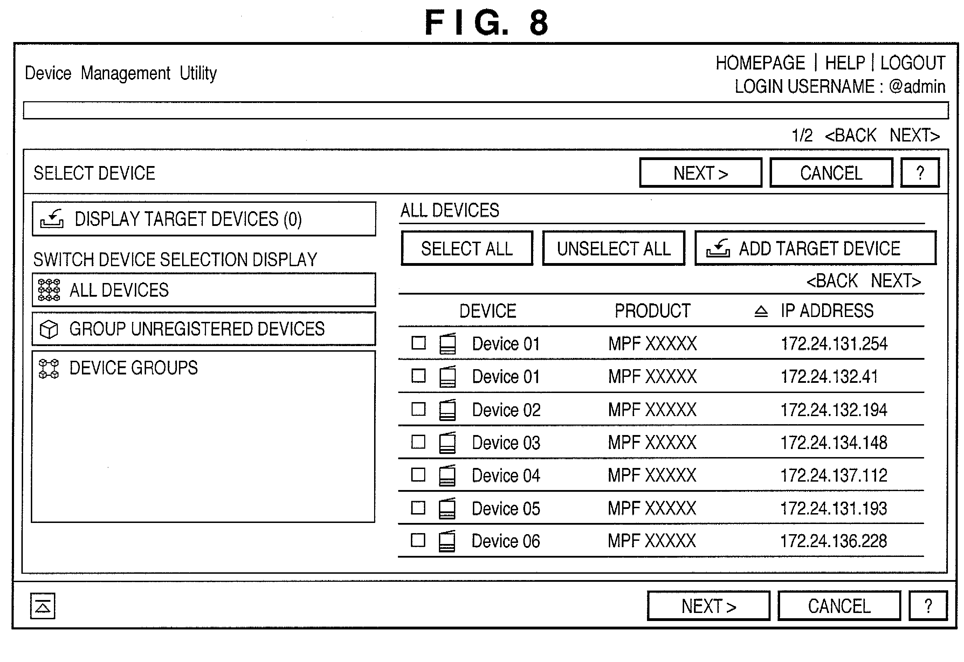

FIG. 8 shows an exemplary terminal selection window generated in step S609. "Device 01" to "Device 06" are displayed on the window shown in FIG. 8. The user is able to select a terminal capable of implementing the task created by the user, using the check box on the window, for example.

In step S610, the HTML data of the generated terminal selection window is displayed on the web browser of the client PC, and the user selects a desired terminal. In step S611, the network terminal management apparatus 101 generates HTML data for an editing window for the task to be implemented on the user terminal, and sends the HTML data to the client PC.

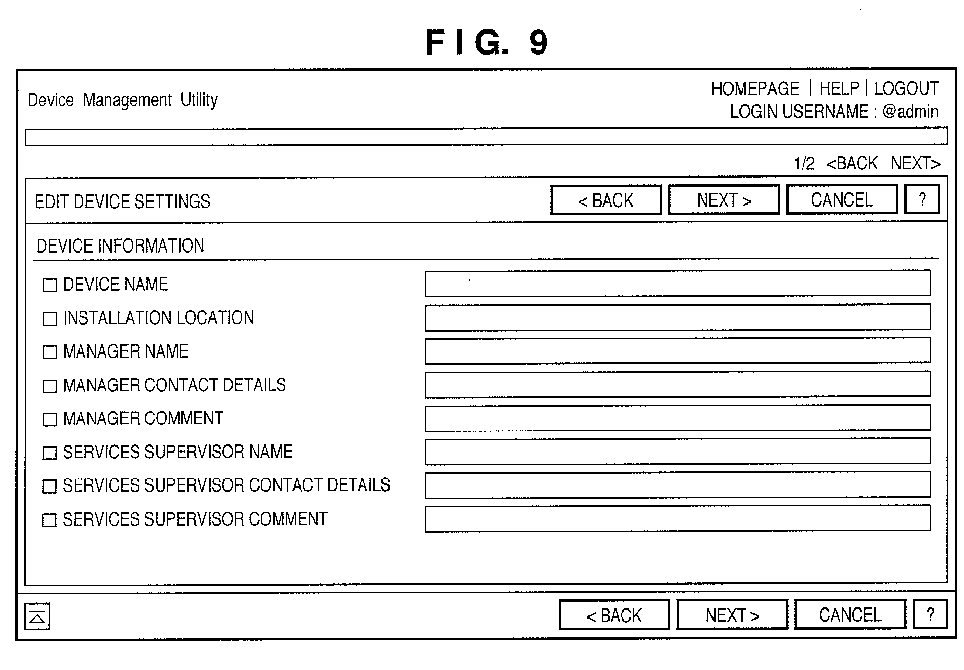

FIG. 9 shows an exemplary task editing window generated in step S611. Using the task editing window shown in FIG. 9, the user is able to perform detailed settings of the task processing to be implemented on the user terminal by the network terminal management apparatus 101. Further, as shown in FIG. 9, the user is able to set character string information such as the name of the user terminal targeted for implementing the task, installation location information and manager information, and also to edit network settings such as frame type and Dynamic Host Configuration Protocol (DHCP). In step S612, the task editing window generated by the network terminal management apparatus 101 is displayed on the web browser of the client PC, and the user edits the task. In step S613, the network terminal management apparatus 101 generates HTML data for a task registration settings window, and sends the HTML data to the client PC.

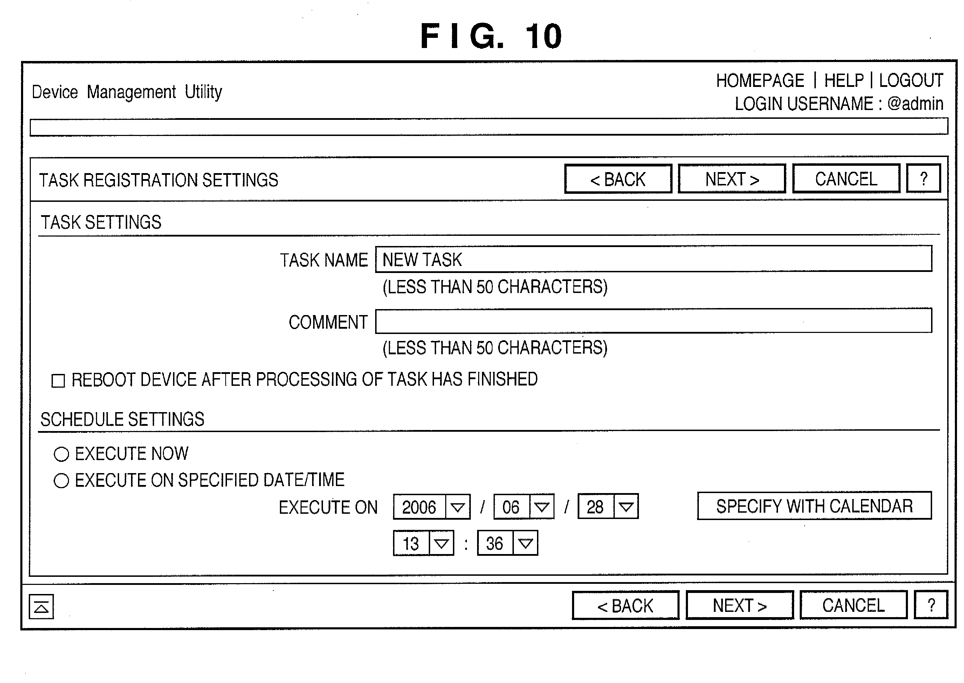

FIG. 10 shows an exemplary task registration settings window generated in step S613. The user is able to set the task name and schedules such as the execution timing of the task edited in step S612, using the window shown in FIG. 10.

In step S614, the task registration settings window generated by the network terminal management apparatus 101 is displayed on the web browser of the client PC, and the user sets the task name and execution timing. In step S615, the network terminal management apparatus 101 stores the task information set by the user in the database 260, and ends the processing.

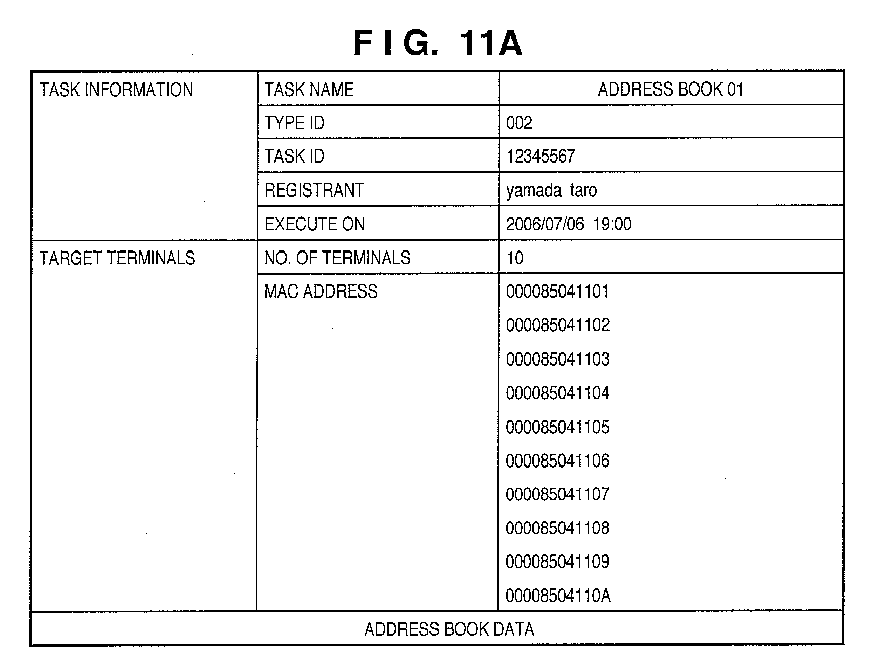

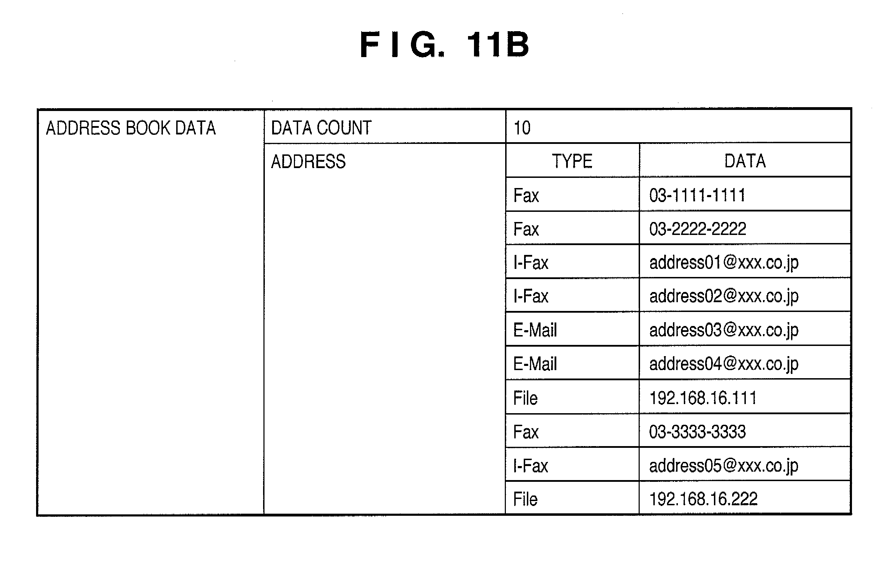

FIGS. 11A and 11B show the structure of task data set by the user and stored in the network terminal management apparatus 101. FIG. 11A shows the overall structure of the task data. The task data is constituted to include task information, target terminal information and address book data. The task information includes task name, type ID, task ID, registrant information and execution date/time information. Here, the task name is the name of the task defined by the user, and the task ID is an identifier for uniquely identifying the task set by the network terminal management apparatus 101. The registrant information shows the username with which the task was registered, and the execution date/time information shows the date and time for launching the task. The target terminal information includes the number of terminals forming the operational target of the task, and the MAC addresses of the terminals. The MAC addresses are converted to IP addresses when the task is executed, and can be used in communication with the terminals. The conversion of MAC addresses to IP addresses is readily realized by the network terminal management apparatus 101 or another network device.

FIG. 11B shows the structure of the address book data shown in FIG. 11A. As shown in FIG. 11B, the address book data includes a data count and address data. The address data includes address type and data showing an address. In the present embodiment, a facsimile number, an Internet fax address, an e-mail address, an IP address used in file transfer, a host name or the like can be used as the address type. The network terminal management apparatus 101, for example, holds FIGS. 11A and 11B in the database 260, as a task list table in which tasks are registered in association with terminals. Further, the network terminal management apparatus 101 generates, as an associated list table, a list of the tasks associated with the user terminal information from the task list table, with reference to the user terminal information and the user authentication information, as described in step S311 of FIG. 3.

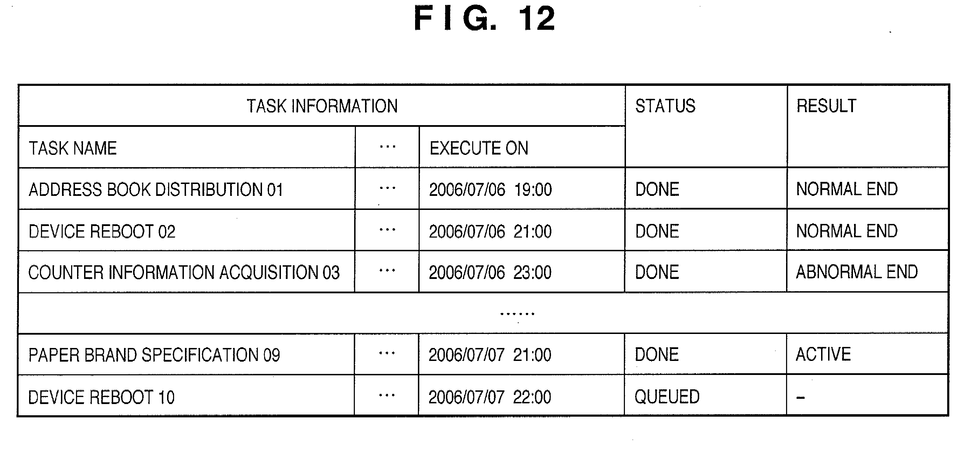

FIG. 12 shows an exemplary task information list stored in the network terminal management apparatus. As shown in FIG. 12, the task information list also includes state information showing whether the task has been executed or is queued for execution. Consequently, as shown in FIG. 5, the user is able to see the state of tasks on the list display in the user terminal. For example, the list display enables the user to perceive that "Task 003 Device status monitoring" shown in FIG. 5 was executed on a different terminal from the use terminal having the same terminal information as the user terminal. That is, the user can see from the list display that the service executed by this task was provided to another terminal.

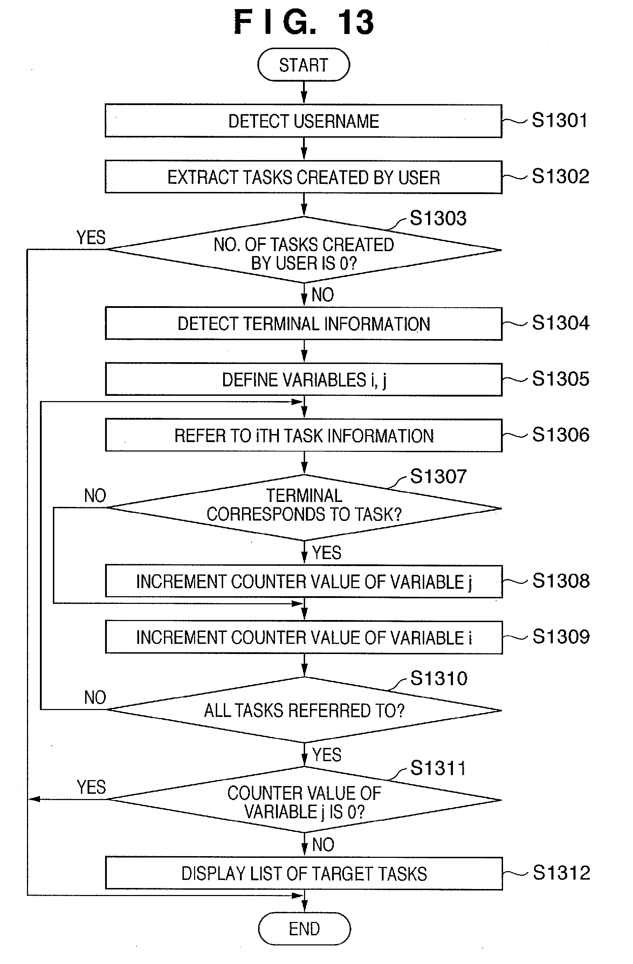

FIG. 13 is a flowchart showing processing performed by the network terminal management apparatus to generate a task list in step S311 shown in FIG. 3. In step S1301, a username is detected with reference to the user authentication information input in step S308 shown in FIG. 3 and user authentication information stored in the system. In step S1302, tasks registered with the detected username as the registrant are extracted from task information stored in the network terminal management apparatus 101. In this case, the total number of extracted tasks is used in subsequent steps.

In step S1303, the number of extracted tasks is determined. Here, if the number of extracted tasks is 0, the processing of the flowchart shown in FIG. 13 is ended. On the other hand, if the number of tasks is not 0, the processing proceeds to step S1304. In step S1304, the network terminal management apparatus 101 detects the user terminal information sent from the user terminal in step S306 shown in FIG. 3 and stored in the network terminal management apparatus 101. In step S1305, the network terminal management apparatus 101 defines variables i and j for referring to the tasks extracted in step S1302 in order. In the present embodiment, a new table is generated from the list of tasks in table format by performing a counting process using the variables i and j.

In step S1305, the network terminal management apparatus 101 initializes the counter values of the variables i and j to 0. In step S1306, the network terminal management apparatus 101 refers to the task information shown by the counter value of the variable i. At this point in time, the counter value of the variable i is 0, so the 0th task information is referred to.

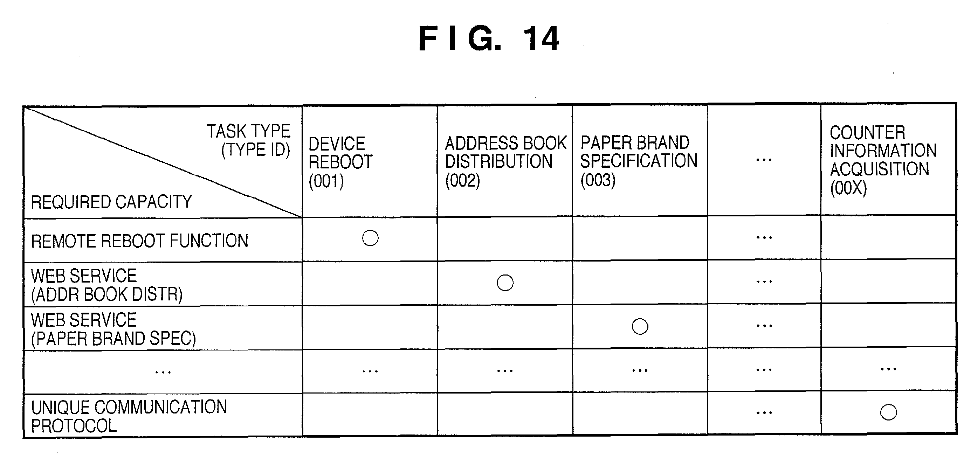

Here, a table, held in the network terminal management apparatus 101, in which each task is corresponded with the terminal capacity required to execute the task will be described. FIG. 14 is an exemplary table showing the correspondence between each task and the capacity required by a user terminal to execute the task. The network terminal management apparatus 101 holds a table such as shown in FIG. 14 in a database or the like, and is able to recognize the capacity required by the user terminal in relation to tasks created by the user. As shown in FIG. 14, in the case of executing the device reboot task, for example, the user terminal needs to be equipped with a remote reboot function. In the case of executing the address book distribution task, the user terminal needs to be equipped with a web service that enables address book setting, and in the case of executing the paper type specification task, the user terminal needs to be equipped with a web service that enables paper type setting.

Referring again to FIG. 13, in step S1306, the network terminal management apparatus 101 refers to the table shown in FIG. 14, in order to determine whether the user terminal is equipped with the required capacity in relation to the 0th task. In step S1307, it is determined whether the 0th task is executable on the user terminal. If executable, the processing proceeds to step S1308, whereas if not executable, the processing proceeds to step S1309. In step S1308, the network terminal management apparatus 101 increments the counter value of the variable j from 0 to 1, and proceeds to step S1309. The counter value of the variable *j* is used in subsequent steps in order to count the tasks executable on the user terminal.

In step S1309, the network terminal management apparatus 101 increments the counter value of the variable i from 0 to 1, and refers to the 1st task. In step S1310, the counter value of the variable *i* is compared with the number of tasks extracted in step S1302. That is, it is determined whether all of the tasks created by the user have been referred to. If all created tasks have been referred to, the processing proceeds to step S1311, whereas if all created tasks have not been referred to, steps S1306 to S1310 are repeated. In step S1311, it is determined whether the counter value of the variable *j* is 0. That is, the network terminal management apparatus 101 determines whether there exist any tasks executable on the user terminal. If there are executable tasks, the processing proceeds to step S1312, whereas if there are no executable tasks, the processing of the flowchart shown in FIG. 13 is ended. In step S1312, the network terminal management apparatus 101 generates a list table of tasks executable on the user terminal, and sends the list table to the user terminal. The generated list table is displayed on the web browser of the user terminal.

When the processing of the flowchart shown in FIG. 13 ends, the steps from step S312 illustrated in FIG. 3 are executed, enabling the user to enjoy desired web services.

As described above, in the present embodiment, the network terminal management apparatus is able to provide optimal web services to a user terminal using a simple method, even in the case where a multifunction processor is used as the user terminal. Also, since the user is able to select a desired service from a list of services displayed on the user terminal, without needing to input user terminal information or the like on the web browser, user friendliness can be maintained even with a multifunction processor having low operability.

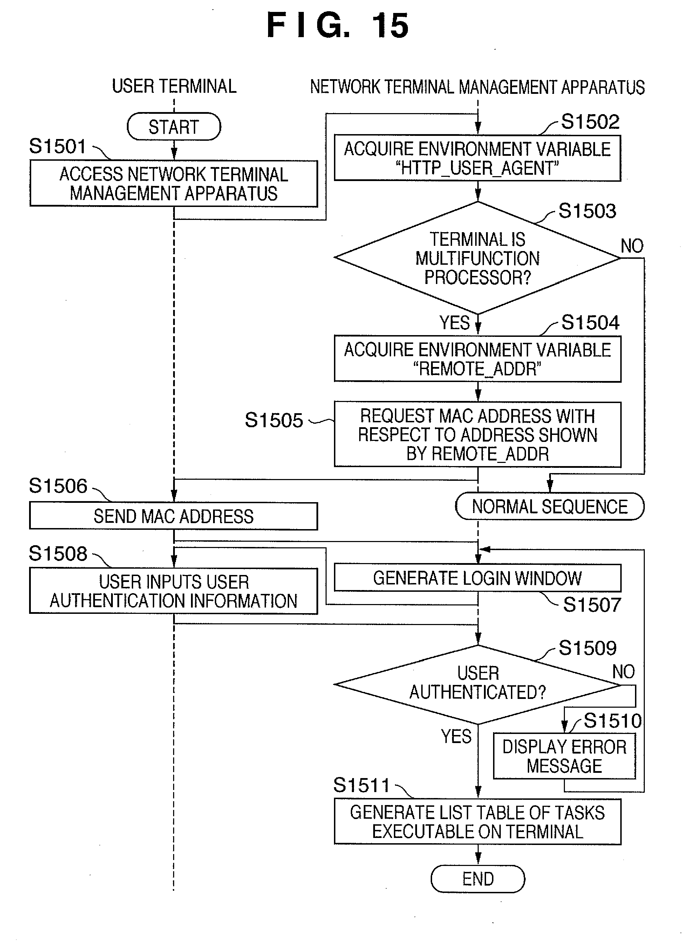

FIG. 15 is a flowchart showing processing procedures performed in the case where the network terminal management apparatus is accessed by a terminal, according to a second embodiment of the present invention. In the present embodiment, the network terminal management apparatus 101 uses a MAC address to manage and store terminal information that forms the operational target of the task selected in step S610 shown in FIG. 6.

In step S1501, the user specifies a URL on the web browser of the user terminal, and accesses the network terminal management apparatus 101. In step S1502, the network terminal management apparatus 101 acquires an HTTP environment variable HTTP_USER_AGENT. In step S1503, the network terminal management apparatus 101 determines whether the user terminal is a multifunction processor, with reference to HTTP_USER_AGENT. Here, if it is determined that the user terminal is a multifunction processor, processing proceeds to step S1504. On the other hand, if it is determined that the user terminal is other than a multifunction processor such as a PC, processing typically used in the network terminal management apparatus is executed.

In step S1504, the network terminal management apparatus 101 acquires an HTTP environment variable REMOTE_ADDR. In step S1505, the network terminal management apparatus 101 recognizes the IP address of the user terminal with reference to the acquired REMOTE_ADDR, and requests the MAC address of the user terminal. Here, a protocol such as SNMP may be used, similarly to the description given in FIG. 3. In step S1506, the user terminal, in response to the request from the network terminal management apparatus 101, notifies the MAC address to the network terminal management apparatus 101.

In step S1507, the network terminal management apparatus 101 generates HTML data for a user login window in order to perform user authentication, and sends the HTML data to the user terminal. In step S1508, the login window generated by the network terminal management apparatus 101 is displayed on the web browser of the user terminal. In step S1509, the network terminal management apparatus 101 performs user authentication using the username and password input by the user. In this case, the network terminal management apparatus 101 holds registered username and password information in the database 260, and may determine in step S1509 whether the information input by the user matches the registered information. Here, if the user is authenticated in step S1509, the processing proceeds to step S1511. On the other hand, if the user is not authenticated, an error message indicating that authentication failed is displayed in step S1510, and steps S1507 to S1509 are repeated. In step S1511, a list of tasks executable on the user terminal is generated, with reference to the MAC address sent from the user terminal and the user authentication information input by the user.

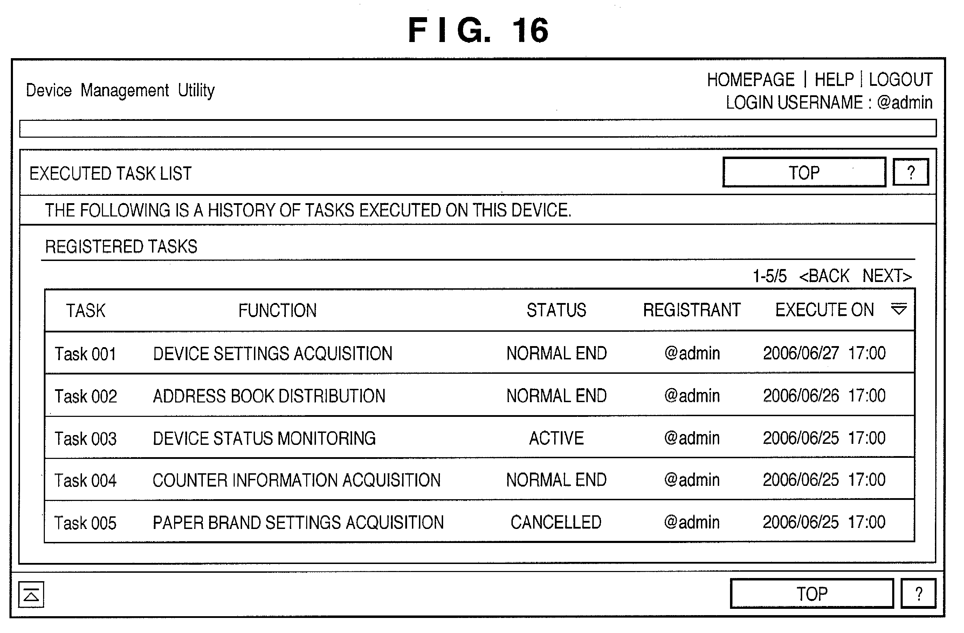

FIG. 16 shows an exemplary task list window generated in step S1511. As shown in FIG. 16, the user is able to check the execution result of tasks executed on the user terminal, and the content of tasks scheduled for execution.

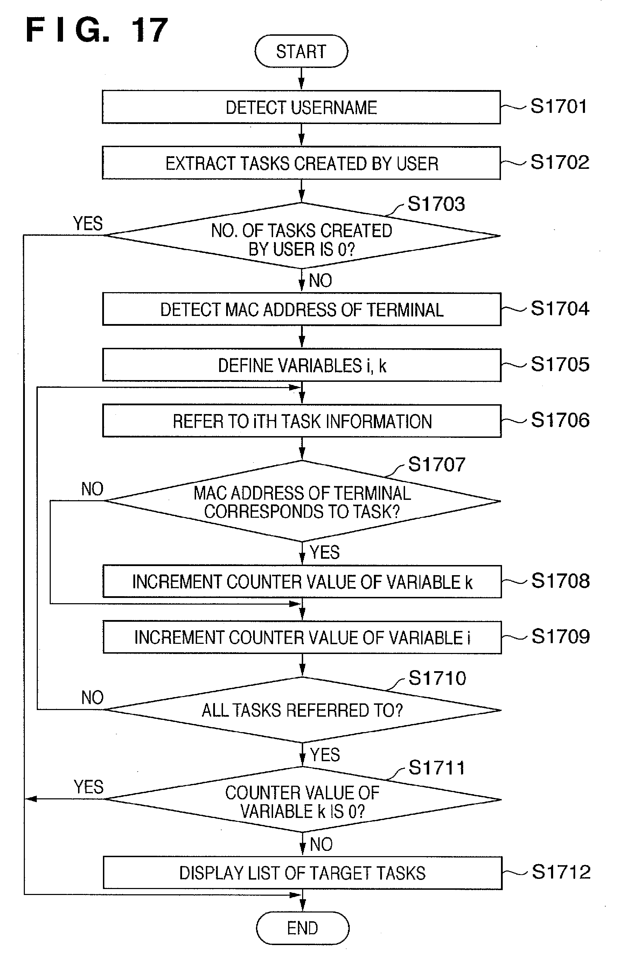

FIG. 17 is a flowchart showing processing performed by the network terminal management apparatus 101 to generate a task list in step S1511 shown in FIG. 15. In step S1701, a username is detected with reference to the user authentication information input in step S1508 shown in FIG. 15 and user authentication information stored in the system. In step S1702, tasks registered with the detected username as the registrant are extracted from task information stored in the network terminal management apparatus 101. In this case, the total number of extracted tasks is used in subsequent steps.

In step S1703, the number of extracted tasks is determined. Here, if the number of extracted tasks is 0, the processing of the flowchart shown in FIG. 17 is ended. On the other hand, if the number of tasks is not 0, the processing proceeds to step S1704. In step S1704, the network terminal management apparatus 101 detects the MAC address sent from the user terminal in step S1506 shown in FIG. 15 and stored in the network terminal management apparatus 101.

In step S1705, the network terminal management apparatus 101 defines variables *i* and *k* for referring to the tasks extracted in step S1702 in order. In the present embodiment, a new table is generated from the list of tasks in table format by performing a counting process using the variables i and k. In step S1705, the network terminal management apparatus 101 initializes the counter values of the variables *i* and *k* to 0. In step S1706, the network terminal management apparatus 101 refers to the task information shown by the counter value of the variable i. At this point in time, the counter value of the variable i is 0, so the 0th task information is referred to. In step S1706, the network terminal management apparatus 101 reads the MAC addresses of the target terminals shown in FIG. 11 in relation to the 0th task.

In step S1707, it is determined whether the MAC address of the user terminal is included in the MAC addresses of the target terminals read in step S1706. Here, if the MAC address of the user terminal is included in the MAC addresses of the target terminals, the processing proceeds to step S1708. On the other hand, if the MAC address of the user terminal is not included in the MAC addresses of the target terminals, the processing proceeds to step S1709. In step S1708, the network terminal management apparatus 101 increments the counter value of the variable k from 0 to 1, and moves to step S1709. The counter value of the variable k is used in subsequent steps in order to count the tasks executable on the user terminal. In step S1709, the network terminal management apparatus 101 increments the counter value of the variable i from 0 to 1, and refers to the 1st task.

In step S1710, the counter value of the variable i is compared with the number of tasks extracted in step S1702. That is, it is determined whether all of the tasks created by the user have been referred to. If all created tasks have been referred to, the processing proceeds to step S1711, whereas if all created tasks have not been referred to, steps S1706 to S1710 are repeated. In step S1711, it is determined whether the counter value of the variable *k* is 0. That is, the network terminal management apparatus 101 determines whether there exist any tasks executable on the user terminal. If there are executable tasks, the processing proceeds to step S1712, whereas if there are no executable tasks, the processing of the flowchart shown in FIG. 17 is ended. In step S1712, the network terminal management apparatus 101 generates a list table of tasks executable on the user terminal, and sends the list table to the user terminal. The generated list table is displayed on the web browser of the user terminal. When the processing of the flowchart shown in FIG. 17 ends, the steps from step S312 illustrated in FIG. 3 are executed, enabling the user to enjoy desired web services.

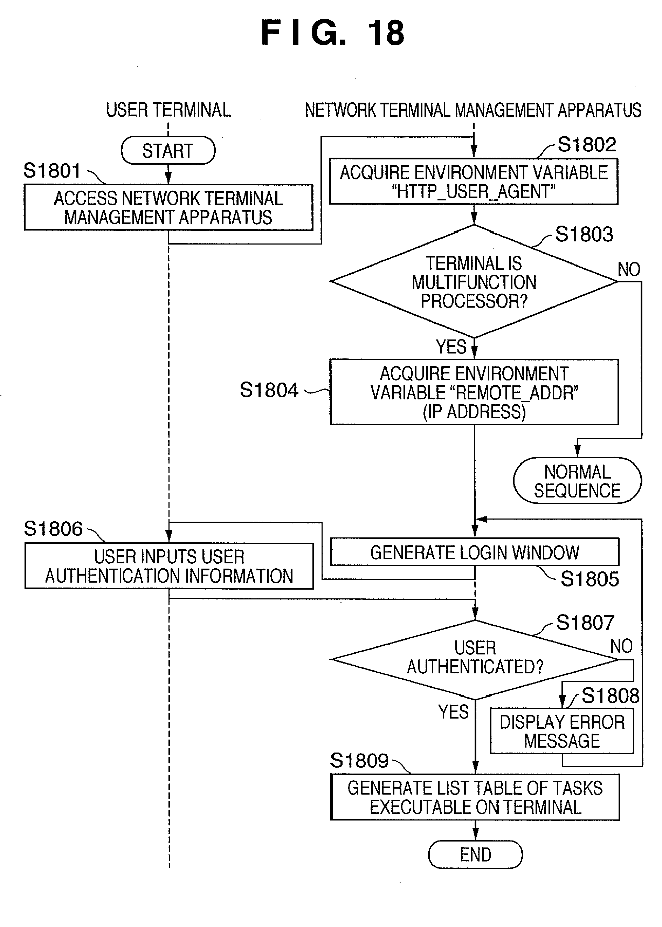

FIG. 18 is a flowchart showing processing procedures performed in the case where the network terminal management apparatus is accessed by a terminal, according to a third embodiment of the present invention. In the present embodiment, the network terminal management apparatus 101 uses an IP address to manage and store terminal information that forms the operational target of the task selected in step S610 shown in FIG. 6.

In step S1801, the user specifies a URL on the web browser of the user terminal, and accesses the network terminal management apparatus 101. In step S1802, the network terminal management apparatus 101 acquires an HTTP environment variable HTTP_USER_AGENT. In step S1803, the network terminal management apparatus 101 determines whether the user terminal is a multifunction processor, with reference to HTTP_USER_AGENT. Here, if it is determined that the user terminal is a multifunction processor, processing proceeds to step S1804. On the other hand, if it is determined that the user terminal is other than a multifunction processor such as a PC, processing typically used in the network terminal management apparatus is executed.

In step S1804, the network terminal management apparatus 101 acquires an HTTP environment variable REMOTE_ADDR. The network terminal management apparatus 101 also recognizes the IP address of the user terminal, with reference to the acquired REMOTE_ADDR. In step S1805, the network terminal management apparatus 101 generates HTML data for a user login window in order to perform user authentication, and sends the HTML data to the user terminal. In step S1806, the login window generated by the network terminal management apparatus 101 is displayed on the web browser of the user terminal. In step S1807, the network terminal management apparatus 101 performs user authentication using the username and password input by the user. In this case, the network terminal management apparatus 101 holds registered username and password information in the database 260, and may determine in step S1807 whether the information input by the user matches the registered information.

If the user is authenticated in step S1807, the processing proceeds to step S1809. On the other hand, if the user is not authenticated, an error message indicating that authentication failed is displayed in step S1808, and steps S1805 to S1807 are repeated. In step S1809, a list of tasks executable on the user terminal is generated, with reference to the IP address of the user terminal acquired from the HTTP environment variable REMOTE_ADDR, and the user authentication information input by the user. A list window such as illustrated in FIG. 16, for example, may be displayed in this case.

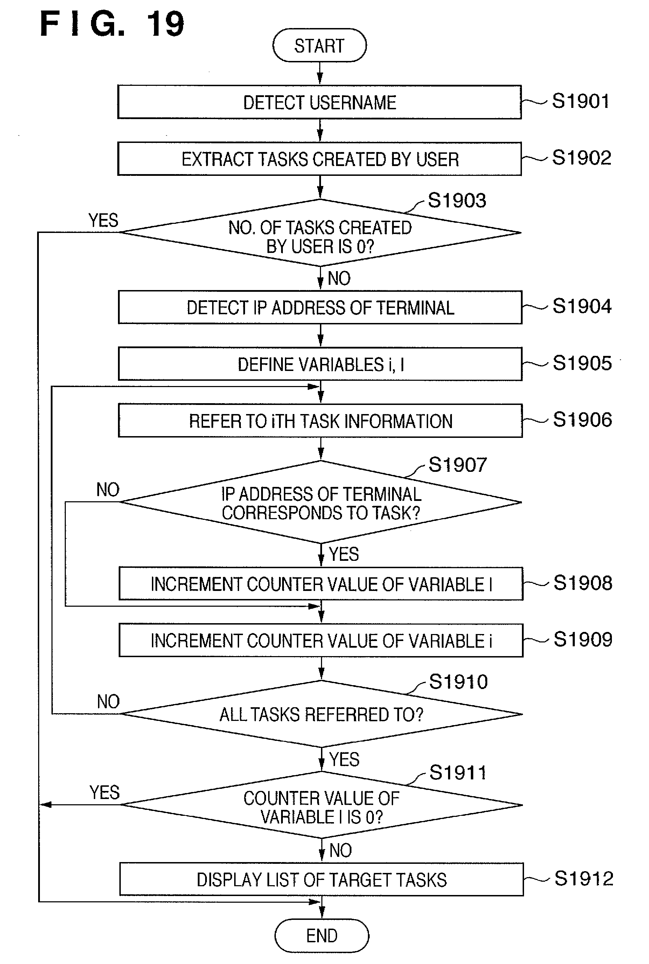

FIG. 19 is a flowchart showing processing performed by the network terminal management apparatus 101 to generate a task list in step S1809 shown in FIG. 18. In step S1901, a username is detected with reference to the user authentication information input in step S1806 shown in FIG. 18 and user authentication information stored in the system. In step S1902, tasks registered with the detected username as the registrant are extracted from task information stored in the network terminal management apparatus 101. In this case, the total number of extracted tasks is used in subsequent steps.

In step S1903, the number of extracted tasks is determined. Here, if the number of extracted tasks is 0, the processing of the flowchart shown in FIG. 19 is ended. On the other hand, if the number of tasks is not 0, the processing proceeds to step S1904. In step S1904, the network terminal management apparatus 101 detects the IP address acquired from the HTTP environment variable REMOTE_ADDR by the network terminal management apparatus 101 in step S1804 shown in FIG. 18 and stored in the network terminal management apparatus 101.

In step S1905, the network terminal management apparatus 101 defines variables *i* and *1* for referring to the tasks extracted in step S1902 in order. In the present embodiment, a new table is generated from the list of tasks in table format by performing a counting process using the variables *i* and *l*. In step S1905, the network terminal management apparatus 101 initializes the counter values of the variables *i* and *l* to 0. In step S1906, the network terminal management apparatus 101 refers to the task information shown by the counter value of the variable i. At this point in time, the counter value of the variable i is 0, so the 0 th task information is referred to. In step S1906, the network terminal management apparatus 101 reads the MAC addresses of the target terminals shown in FIG. 11 in relation to the 0th task, and converts the MAC addresses to IP addresses. In step S1907, it is determined whether the IP address of the user terminal is included in the IP addresses of the target terminals read in step S1906. Here, if the IP address of the user terminal is included in the IP addresses of the target terminals, the processing proceeds to step S1908. On the other hand, if the IP address of the user terminal is not included in the IP addresses of the target terminals, the processing proceeds to step S1909. In step S1908, the network terminal management apparatus 101 increments the counter value of the variable *l* from 0 to 1, and proceeds to step S1909. The counter value of the variable *l* is used in subsequent steps in order to count the tasks executable on the user terminal. In step S1909, the network terminal management apparatus 101 increments the counter value of the variable i from 0 to 1, and refers to the 1st task.

In step S1910, the counter value of the variable i is compared with the number of tasks extracted in step S1902. That is, it is determined whether all of the tasks created by the user have been referred to. If all created tasks have been referred to, the processing proceeds to step S1911, whereas if all created tasks have not been referred to, steps S1906 to S1910 are repeated. In step S1911, it is determined whether the counter value of the variable *l* is 0. That is, the network terminal management apparatus 101 determines whether there exist any tasks executable on the user terminal. If there are executable tasks, the processing proceeds to step S1912, whereas if there are no executable tasks, the processing of the flowchart shown in FIG. 19 is ended. In step S1912, the network terminal management apparatus 101 generates a list table of tasks executable on the user terminal, and sends the list table to the user terminal. The generated list table is displayed on the web browser of the user terminal. When the processing of the flowchart shown in FIG. 19 ends, the steps from step S312 illustrated in FIG. 3 are executed, enabling the user to enjoy desired web services.

The present invention can also be realized as a network terminal management program as follows. The present invention also includes the case where an operating system or the like running on a computer performs part or all of the actual processing based on instructions in the program code, with the functions of the foregoing embodiments being realized as a result of this processing. Further, the present invention is applicable to the case where program code read from a storage medium is written to a memory provided in a function expansion card inserted in a computer or a function expansion unit connected to a computer. In this case, a CPU or the like provided in the function expansion card or the function expansion unit performs part or all of the actual processing based on instructions in the written program code, with the functions of the foregoing embodiments being realized as a result of this processing.

A further embodiment of the present invention provides a network terminal management apparatus (101) for communicating via a network with a user terminal (102) having a web browser, comprising:
storing means arranged to store a task list table in which one or more tasks are registered;
terminal type recognition means arranged to recognize that a user terminal (102) which accesses the network terminal management apparatus (101) is a multifunction device, with reference to access information acquired when the user terminal (102) accesses the network terminal management apparatus (101);
terminal information acquiring means arranged to acquire, from the user terminal (102), terminal information held by the user terminal (102), if the user terminal (102) is recognized to be a multifunction device by the terminal type recognition means;
user authentication means arranged to perform user authentication, with reference to user authentication information input to the user terminal (102);
task list generating means arranged to generate, as an associated list table, a list of tasks associated in the task list table with the terminal information held by the user terminal (102); and
task list sending means arranged to send information of the associated list table to the user terminal (102).

While the present invention has been described with reference to exemplary embodiments, it is to be understood that the invention is not limited to the disclosed exemplary embodiments. The scope of the following claims is to be accorded the broadest interpretation so as to encompass all modifications, equivalent structures and functions.

## Claims

1. A network terminal management apparatus (101) for communicating via a network with a user terminal (102), the network terminal management apparatus (101) comprising:
terminal type recognition means arranged to recognize whether a user terminal (102) which accesses the network terminal management apparatus (101) is a multifunction device;
terminal information acquiring means arranged to acquire, from the user terminal (102), terminal information held by the user terminal (102), if the user terminal (102) is recognized to be a multifunction device;
task list generating means arranged to generate a list of tasks associated with the acquired terminal information; and
task list sending means arranged to send information of the associated list to the user terminal (102).

2. A network terminal management apparatus (101) according to claim 1, wherein the terminal type recognition means is arranged to recognize whether a user terminal (102) is a multifunction device with reference to access information acquired when the user terminal (102) accesses the network terminal management apparatus (101).

3. A network terminal management apparatus (101) according to claim 1 or claim 2, further comprising user authentication means arranged to perform user authentication with reference to user authentication information input to the user terminal (102), and wherein the task list generating means is arranged to generate the list of tasks with reference to the user authentication information.

4. A network terminal management apparatus (101) according to any one of claims 1 to 3, wherein the terminal information is a MAC address.

5. A network terminal management apparatus (101) according to any one of claims 1 to 3, wherein the terminal information is an IP address.

6. A network terminal management apparatus (101) according to any preceding claim, wherein the associated list generated by the task list generating means includes a task performed on a different terminal from the user terminal (102) having the same terminal information as the user terminal (102).

7. A network terminal management system comprising:
a network terminal management apparatus (101) as claimed in any of claims 1 to 6; and
a user terminal (102) which receives the information of the associated list generated by the task list generating means, and displays the received information.

8. A network terminal management method for communicating via a network with a user terminal (102) having a web browser, the method comprising the steps of:
a terminal type recognition step (S303) of recognizing whether a user terminal (102) which accesses the network terminal management apparatus (101) is a multifunction device;
a terminal information acquiring step (S304) of acquiring, from the user terminal (102), terminal information held by the user terminal (102), if the user terminal (102) is recognized to be a multifunction device in the terminal type recognition step;
a task list generating step (S311) of generating a list of tasks associated with the acquired terminal information; and
a task list sending step (S311) of sending information of the associated list to the user terminal (102) .

9. A network terminal management method according to claim 8, wherein the terminal type recognition step (S303) recognizes whether a user terminal (102) is a multifunction device with reference to access information acquired when the user terminal (102) accesses the network terminal management apparatus (101).

10. A network terminal management method according to claim 8 or claim 9, further comprising a user authentication step (S309) of performing user authentication with reference to user authentication information input to the user terminal (102), and wherein the task list generating step (S311) generates the list of tasks with reference to the user authentication information.

11. A program which, loaded into a computer, causes the computer to become a management apparatus (101) according to any one of claims 1 to 6.

12. A storage medium storing a program according to claim 11.
